# EUROPÄISCHE PATENTSCHRIFT

(11) **EP 3 313 946 B1**
(45) Veröffentlichungstag und Bekanntmachung des Hinweises auf die Patenterteilung: **02.12.2020**
(21) Anmeldenummer: 16726859.8
(22) Anmeldetag: 31.05.2016
(51) Int. Cl.: C09D 11/037, C09D 11/322, C09D 11/40, C09B 29/00, C09B 41/00

(54) **VERWENDUNG VON NEUEN NAPHTHOL AS-PIGMENT-MISCHUNGEN IN PRINTING-MATERIALIEN**
USE OF NOVEL NAPHTHOL AS-PIGMENT-MIXTURES IN PRINTING-MATERIALS
UTILISATION DE NOUVEAUX MÉLANGES DE PIGMENTS DE NAPHTOL AS DANS DES MATIÈRES D'IMPRESSION

(30) Priorität: 25.06.2015 DE 102015211829
(43) Veröffentlichungstag der Anmeldung: 02.05.2018
(73) Patentinhaber: Clariant Plastics & Coatings Ltd, 4132 Muttenz (CH)
(72) Erfinder: ROHR, Ulrike, 69469 Weinheim (DE); SOLDIGA RAMIREZ, Demma, 68167 Mannheim (DE); EICHHORN, Joachim, 65929 Frankfurt am Main (DE)
(74) Vertreter: Jacobi, Carola
(86) Internationale Anmeldenummer: PCT/EP2016/062298
(87) Internationale Veröffentlichungsnummer: WO 2016/206928

(56) Entgegenhaltungen:
- WO-A1-03/099936
- WO-A1-2005/019346
- WO-A1-2005/105928
- CN-A- 1 315 473
- JP-A- 2004 061 686
- JP-A- 2004 126 120

## Beschreibung

Die vorliegende Erfindung betrifft die Verwendung von neuen Naphthol AS-Pigment-Mischungen in Druckverfahren, insbesondere für elektrophotographische Toner, den Ink-Jet-Druck, in der Herstellung von Farbfiltern sowie in klassischen Druckfarben.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüber hinaus sind noch Spezialtoner, wie z. B. Magnet- oder Flüssigtoner und Polymerisationstoner, im Einsatz.

Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z. B. bessere Thermostabilität und Lichtechtheit.

In den sogenannten konventionellen Tonerherstellungsprozessen werden die Farbmittel mittels Extrudern oder Knetern in die Tonerbindemittel zusammen mit anderen Tonerinhaltsstoffen, wie Ladungssteuermitteln und Wachsen, eingearbeitet (dispergiert). Für die Herstellung von Tonern ist es in der Praxis wichtig, dass die Farbmittel eine ausreichende Thermostabilität und eine gute Dispergierbarkeit in dem jeweiligen Tonerbindemittel besitzen. Typische Einarbeitungstemperaturen für Farbmittel in die Tonerharze liegen bei Verwendung von Knetern oder Extrudern zwischen 70 und 200 °C. Dementsprechend ist eine Thermostabilität von 200 °C, besser 250 °C, von großem Vorteil. Wichtig ist auch, dass die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, die noch weitere Inhaltsstoffe, wie Ladungssteuermittel, Wachse oder Fließhilfsmittel, enthalten können oder im Nachhinein zugesetzt bekommen können.

Neben dem beschriebenen Prozess der Tonerherstellung in einem physikalischen Mischprozess werden bei der Herstellung moderner Toner verschiedene sogenannte chemische Prozesse verwendet, bei denen das Tonerpolymer in einer Polymerisationsreaktion aus geeigneten Monomeren oder Oligomeren in Gegenwart der weiteren Inhaltsstoffe (Farbmittel, Ladungssteuerungsmittel, Wachs usw.) hergestellt wird und durch Einbinden der genannten Inhaltsstoffe. Weiterhin gibt es Prozesse, bei denen die gewünschten Tonerpartikel durch eine Aggregation von Polymerteilchen im Nanometerbereich zu größeren Teilchen im Mikrometerbereich unter Einschluss der genannten Tonerinhaltsstoffe erhalten werden.

Diesen Prozessen ist gemein, dass die Tonerinhaltsstoffe und damit auch das Farbmittel in einem flüssigen Medium eingearbeitet und fein verteilt (dispergiert) vorliegen muss. Dabei liegt in der Regel ein mehrphasiges System (Wasser/Monomere, Oligomere oder Wasser/Lösemittel/Monomer bzw Oligomer oder ein Latex) vor.

Die Verträglichkeit und gute Dispergierbarkeit der eingesetzten Inhaltstoffe mit den in den genannten chemischen Tonerherstellungsprozessen verwendeten Reaktionsmedien ist von großer Bedeutung für die Qualität des Toners. So beeinflusst sie z. B. die Aufladbarkeit, Transparenz und Farbtonreinheit, aber auch die Effektivität des Herstellprozesses (die Inhaltsstoffe dürfen z. B. die Polymerisationsreaktion nicht stören).

Flüssigtoner bestehen in der Regel aus einem unpolaren Lösemittel, in dem die eigentlichen Tonerteilchen im Mikrometerbereich fein verteilt sind. Hier werden spezielle Ansprüche an die Lösemittelechtheit der Inhaltsstoffe gestellt. Ebenso gelten die oben gemachten Bemerkungen der Verträglichkeit und Dispergierbarkeit im verwendeten Trägermaterial.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden. Um Drucke von exzellenter Qualität zu erhalten, müssen die Aufzeichnungsflüssigkeiten und die darin enthaltenen Farbmittel hohen Anforderungen genügen, insbesondere auch im Hinblick auf den gewünschten Farbton und die Zuverlässigkeit während des Druckvorgangs.

Neben farbstoffbasierenden Tinten werden auch verstärkt pigmentierte Tinten im Ink-Jet-Druck eingesetzt. Die Feinteiligkeit der in den Tinten enthaltenen Pigmente ist eine Grundvoraussetzung für deren Anwendung im Ink-Jet-Druck, zum einen um ein Verstopfen der Düsen zu verhindern, zum anderen aber auch um eine hohe Transparenz und einen gewünschten Farbton zu erzielen.

Ink-Jet-Tinten können hergestellt werden, indem eine Pigmentzusammensetzung in das wässrige oder nicht-wässrige Medium, in das Mikroemulsionsmedium, oder in das Medium zur Herstellung der UV-härtbaren Tinte oder in das Wachs zur Herstellung einer Hot-Melt-Ink-Jet-Tinte eindispergiert wird. Zweckmäßigerweise werden die dabei erhaltenen Drucktinten für Ink-Jet-Anwendungen anschließend filtriert (z. B. über einen 1 µm Filter).

Allen Druckanwendungen ist das Prinzip der subtraktiven Farbmischung gemein, bei der das gesamte für das menschliche Auge sichtbare Farbspektrum durch Mischung der Primärfarben Gelb, Cyan und Magenta erzeugt wird. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend. Für die subtraktive Farbmischung ist es außerdem wichtig, dass die einzelnen Grundfarbtöne eine möglichst hohe Farbtonreinheit aufweisen, um eine brillante Farbwiedergabe zu erreichen.

Grundsätzlich besteht Bedarf an einem Magenta-Pigment, das eine möglichst hohe Transparenz, Blaustichigkeit, hohe Farbreinheit und gute Dispergierbarkeit in Druckmaterialien, insbesondere in Tonerpolymeren bzw. chemischen Tonerherstellungsmedien, in Ink Jet Tintensystemen und Druckfarbmedien, aber auch in elektronischen Tinten ("electronic inks" bzw. "e-inks") oder "electronic paper" ("e-paper") besitzt.

Die Transparenz ist von zentraler Bedeutung, weil beim Vollfarbdruck (sowohl in den klassischen Verfahren als auch in den digitalen Druckprozessen, wie Elektrophotographie und Ink Jet-Druck) die Farben Gelb, Cyan und Magenta übereinander gedruckt werden, wobei die Reihenfolge der Farben von der jeweiligen Maschine abhängt. Ist nun eine oben liegende Farbe nicht transparent genug, so kann die darunter liegende nicht ausreichend durchscheinen und die Farbwiedergabe ist verzerrt.

Für die Darstellung des Magenta-Farbtons sind in den derzeitig verwendeten Tonern, Ink Jet Tinten und Druckfarben verschiedene Magenta-Pigmente im Einsatz, wobei besonders im Ink Jet Druck und in der Elektrophotographie Pigmente aus der Chinachridonreihe (P. R. 122, P.V. 19) breite Verwendung finden. Chinachridonpigmente sind aufgrund Ihres blaustichigen Magentafarbtons bei sehr hohen Chromawerten gut für diese Anwendung geeignet. Allerdings sind sie vergleichsweise farbschwach, wodurch die Einsatzmenge in der Tinte bzw. dem Toner erhöht werden muss, um eine ausreichende Farbtontiefe zu erreichen. Auf der anderen Seite werden bei erhöhter Pigmentkonzentration in den Drucktinten und Tonern die rheologischen und andere anwendungsrelevante Eigenschaften nachteilig beeinflusst. Alternativ zu Chinacridonen werden Azopigmente in Tinten und Tonern sowie Druckfarben eingesetzt. Bekannte Azopigmente wie z. B. P.R. 146, 147, 185, 269 sind im Vergleich zu Chinacridonen deutlich farbstärker, können aber nicht den sehr blaustichigen Magentabereich des Farbraumes abdecken und sind außerdem weniger rein im Farbton. Oft werden auch Kombinationen aus Chinachridon-und Azopigmenten verwendet, um den gewünschten Farbton zu erhalten.

Der vorliegenden Erfindung lag die Aufgabe zugrunde, ein möglichst preisgünstiges, transparentes, blaustichiges und brilliantes Azo-Farbmittel mit guter Dispergierbarkeit und hoher Thermostabilität für die Anwendung in elektrophotographischen Tonern und Entwicklern, Ink-Jet-Tinten, Farbfiltern sowie Druckfarben zur Verfügung zu stellen.

Es wurde überraschend gefunden, dass nachstehend beschriebene Kombinationen verschiedener Naphthol AS-Pigmente die erfindungsgemäße Aufgabe lösen.

Gegenstand der vorliegenden Erfindung ist die Verwendung von Mischungen von Naphthol AS-Pigmenten, die jeweils mindestens ein Naphthol AS-Pigment der nachstehend beschriebenen Formeln (IIIa) und (IIIb) enthalten,
als Farbmittel in Druckverfahren.

Im Sinne der Erfindung werden Mischungen von Naphthol AS-Pigmenten eingesetzt, die jeweils mindestens ein Naphthol AS-Pigment der Formeln (IIIa) und (IIIb) enthalten, 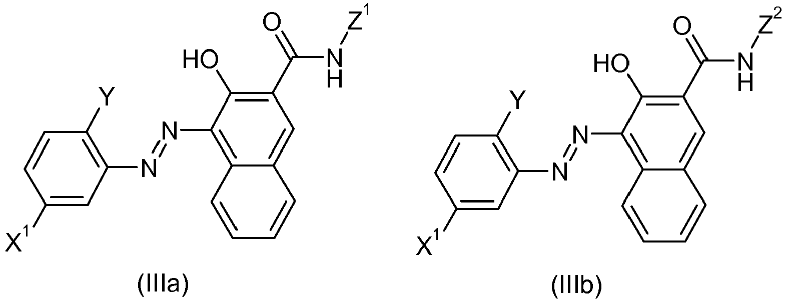 worin unabhängig voneinander
- X¹: die Bedeutung Carbamoyl, Methylcarbamoyl oder Ethylcarbamoyl;
- Y: die Bedeutung Methoxy oder Ethoxy;
- Z¹: die Bedeutung Methylphenyl, Ethylphenyl, Methoxyphenyl oder Ethoxyphenyl;; und
- Z²: die Bedeutung Nitrophenyl oder Cyanophenyl haben.

Von ganz besonderem Interesse sind Mischungen von Naphthol AS-Pigmenten, die jeweils mindestens ein Naphthol AS-Pigment der vorstehenden Formeln (IIIa) und (IIIb enthalten, worin
- X¹: die Bedeutung Carbamoyl oder Methylcarbamoyl;
- Y: die Bedeutung Methoxy;
- Z¹: die Bedeutung Methylphenyl, insbesondere o-Methylphenyl; und
- Z²: die Bedeutung Nitrophenyl, insbesondere m-Nitrophenyl, haben.

Die erfindungsgemäß verwendeten Pigmentmischungen enthalten zweckmäßigerweise 1 bis 99 Gew.-% einer Komponente der Formel (IIIa) und 99 bis 1 Gew.-% einer Komponente der Formel (IIIb), bevorzugt 5 bis 95 Gew.-% einer Komponente der Formel (IIIa) und 95 bis 5 Gew.-% einer Komponente der Formel (IIIb), besonders bevorzugt 10 bis 90 Gew.-% einer Komponente der Formel (IIIa) und 90 bis 10 Gew.-% einer Komponente der Formel (IIIb), ganz besonders bevorzugt 25 bis 75 Gew.-% einer Komponente der Formel (IIIa) und 75 bis 25 Gew.-% einer Komponente der Formel (IIIb), insbesondere 40 bis 60 Gew.-% einer Komponente der Formel (IIIa) und 60 bis 40 Gew.-% einer Komponente der Formel (IIIb), jeweils bezogen auf das Gesamtgewicht der Pigmentmischung.

Die erfindungsgemäß verwendeten Pigmentmischungen enthalten optional ein oder mehrere zusätzliche Farbmittel der allgemeinen Formel (IV) in Anteilen bis zu 10 Gew.-%, beispielsweise von 0,1 bis 10 Gew.-%, bezogen auf das Gesamtgewicht der Pigment-Mischung, 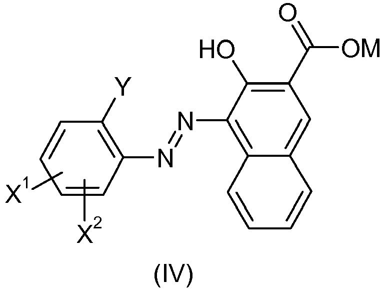 worin
- X²: Wasserstoff bedeutet, und X¹, Y eine der oben angegebenen Bedeutungen besitzt und
- M: für Wasserstoff, ein Alkalimetall, ein Erdalkalimetall oder für Ammonium
steht.

Die erfindungsgemäß verwendeten Pigment-Mischungen können zudem optional ein oder mehrere Restkuppler aus der Gruppe der β-Naphthol-Derivate der allgemeinen Formeln (VIa) und/oder (VIb) in Anteilen von bis zu 10 Gew.-%, beispielsweise von 0,1 bis 10 Gew.-%, bezogen auf das Gesamtgewicht der Pigment-Mischung, enthalten, 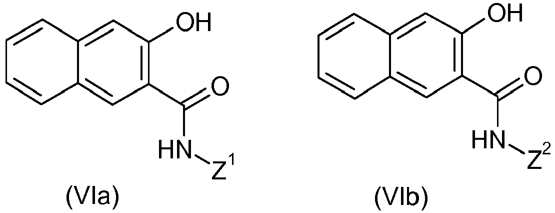 worin Z¹ und Z²
eine der oben angegebenen Bedeutungen besitzen.

Die erfindungsgemäß verwendeten Pigmentmischungen können hergestellt werden durch Diazotierung von Aminen der Formel (Va) 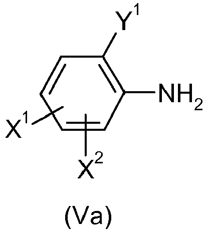 worin
- X¹: sich in para-Position zum Rest Y¹ befindet,
- X²: Wasserstoff ist, und
- Y¹: eine der für Y definierten Bedeutungen besitzt,
in saurem Medium und anschließende Kupplung der so erhaltenen Diazoniumverbindungen auf eine Mischung aus mindestens zwei Kupplungskomponenten der Formeln (VIa) und (VIb)

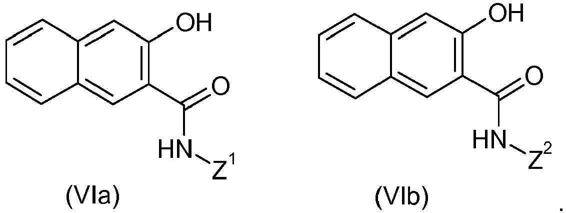

Anschließend kann die erhaltene Pigmentsuspension filtriert und der erhaltene feuchte Presskuchen zweckmäßigerweise bis zur Gewichtskonstanz getrocknet werden.

Die Diazotierung und Kupplung können nach allgemein bekannten Methoden durchgeführt werden und sind in der am gleichen Tag eingereichten deutschen Patentanmeldung Nr. 102015211828.2 beschrieben (R 6380)

Die erfindungsgemäß verwendeten Pigmentmischungen können auch Hilfsmittel, wie beispielsweise Tenside, pigmentäre und nichtpigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren oder eine Kombination davon eingesetzt werden.

Die Zugabe der Hilfsmittel kann zu einem beliebigen Zeitpunkt vor, während oder nach der Reaktion/Synthese erfolgen, auf einmal oder in mehreren Portionen. Dabei können die Hilfsmittel beispielsweise direkt zu den Lösungen oder Suspensionen der Reaktanden, aber auch während der Reaktion in flüssiger, gelöster oder suspendierter Form zugegeben werden.

Die Gesamtmenge der zugegebenen Hilfsmittel kann 0 bis 40 Gew.-%, bevorzugt 1 bis 30 Gew.-%, besonders bevorzugt 2,5 bis 25 Gew.-%, bezogen auf das Gesamtgewicht der Pigmentmischung plus Hilfsmittel, betragen.

Als Tenside kommen anionische oder anionaktive, kationische oder kationaktive und nichtionische Substanzen oder Mischungen dieser Mittel in Betracht.

Beispiele für Tenside, pigmentäre und nicht-pigmentäre Dispergiermittel, die für das erfindungsgemäße Verfahren verwendet werden können, sind in der EP-A-1 195 411 angegeben.

Als Farbmittel zum Nuancieren eignen sich z.B. Pigmente aus der Gruppe der Azo- und/oder polycyclischen Pigmente ausgewählt werden, z. B. Gelbpigmente, wie C.I. Pigment Yellow 155, P.Y. 139, P.Y. 83, P.Y. 181, P.Y. 191, P.Y. 75, P.Y. 180 oder P.Y. 97; Orangepigmente, wie Pigment Orange 62, P.O. 36, P.O. 34, P.O. 13, P.O. 36, P.O. 13, P.O. 43, P.O. 5 oder P.O. 73; rote/magentafarbene Pigmente, wie Pigment Red 57, P.R. 48, P.R. 122, P.R. 146, P.R. 147, P.R. 269, P.R. 154, P.R. 185, P.R. 184, P.R. 192, P.R. 202, P.R. 207, P.R. 206, P.R. 209 oder P.R. 254; und violette Pigmente, wie Pigment Violet 19, P.V. 23, P.V. 29, P.V. 35 oder P.V. 37, P. V. 42, P.V. 57 und ebenso Blaupigmente, wie Pigment Blue 15, P.B. 60 oder P.B. 80.

Besonders bevorzugt als Mischungspartner sind Chinachridone z.B. P. R. 122, P. R. 202, P. V. 19 und Chinachridon-Mischkristalle aus zwei oder mehr Komponenten, sowie weitere Azopigmente aus der Gruppe der Naphthol-AS-Pigmente, wie z. B. P.R. 184, P.R. 185, P.R. 176, P.R. 269, P.R. 146, P. R. 147, P.R. 150.

Bevorzugte Farbstoffe, die zur Nuancierung der erfindungsgemäßen Pigmentmischungen eingesetzt werden können, sind wasserlösliche Farbstoffe aus der Gruppe der Direkt-, Reaktiv- und Säurefarbstoffe, und auch Farbstoffe aus der Reihe der Solventfarbstoffe (Solvent Dyes), Dispersionsfarbstoffe (Disperse Dyes) und Küpenfarbstoffe (Vat Dyes). Hierfür seien als spezifische Beispiele erwähnt C.I. Reactive Yellow 37, Acid Yellow 23, Reactive Red 23, 180, Acid Red 52, 92 Reactive Blue 19, 21, Acid Blue 9, Direct Blue 199, Solvent Yellow 14, 16, 25, 56, 64, 79, 81, 82, 83:1, 93, 98, 133, 162, 174, Solvent Red 8, 19, 24, 49, 52, 89, 90, 91, 109, 118, 119, 122, 127, 135, 149, 160, 195, 196, 197, 212, 215, Solvent Blue 44, 45, Solvent Orange 60, 63, Disperse Yellow 64, Disperse Red 11, Vat Red 41, Vat Violet 3, Basic Red 1, Basic Violet 10,11 .

Als erfindungsgemäß verwendete Pigmentzusammensetzung werden im Folgenden die erfindungsgemäß verwendeten Naphthol AS-Pigmentmischungen, die gegebenenfalls ein oder mehrere der vorstehend genannten Hilfsmittel enthalten, bezeichnet.

Die erfindungsgemäßen Pigmentzusammensetzungen ergeben bei der Verwendung in Tonern, Inkjet -Tinten, Farbfiltern und Druckfarbensystemen blaustichige Magentafarbtöne, die für die subtraktive Farbmischung ideal geeignet sind. Dabei können die erfindungsgemäßen Pigmentzusammensetzungen sowohl als alleiniges Farbmittel als auch in Mischungen mit anderen Pigmenten oder Farbstoffen, wie vorstehend beschrieben, eingesetzt werden.

Im Sinne der vorliegenden Erfindung werden unter Druckverfahren sowohl klassische Druckverfahren auf Papier, Karton, Textilien oder Kunststoffen, wie z. B. Offset Druck, Flexodruck oder Tiefdruck, als auch Non-Impact-Printing-Verfahren, wie z. B. in der Elektrophotographie, beim Ink-Jet-Druck, elektronischen Tinten und der Herstellung von Farbfiltern, verstanden.

Gegenstand der vorliegenden Erfindung ist weiterhin eine Druckfarbe, z. B. eine Offsetdruck-, Flexodruck- oder Tiefdruckfarbe, enthaltend eine vorstehend beschriebene Pigmentzusammensetzung, zweckmäßig in einer Konzentration von 5 bis 15 Gew.-%, bezogen auf das Gesamtgewicht der Druckfarbe.

Gegenstand der vorliegenden Erfindung ist weiterhin ein elektrophotographischer Toner oder Entwickler enthaltend eine vorstehend beschriebene Pigmentzusammensetzung, zweckmäßig in einer Konzentration von 1 bis 20 Gew.-%, vorzugsweise 3 bis 15 Gew.-%, bezogen auf das Gesamtgewicht des Toners oder Entwicklers. Toner und Entwickler sind beispielsweise Ein- oder Zweikomponentenpulvertoner (auch Ein- oder Zweikomponenten-Entwickler genannt), Magnettoner, Flüssigtoner, Latextoner, Polymerisationstoner sowie Spezialtoner. Diese können sowohl in den so genannten konventionellen Tonerherstellungsprozessen mittels Extrusion aber auch in chemischen Tonerherstellungsprozessen wie Emulsion -Aggregation, Suspensionspolymerisation oder anderen eingesetzt werden. Im Unterschied zum klassischen Tonerherstellungsprozess, bei dem das Pigment in ein Tonerträgermaterial (Polystyrol, Polyester o. ä.) zusammen mit anderen Inhaltsstoffen eingearbeitet wird, müssen Pigmente in den chemischen Tonerprozessen in der Regel in flüssigen Medien (z. B. mittels einer Perlmühle) fein dispergiert werden.

Gegenstand der vorliegenden Erfindung ist weiterhin eine Inkjet-Tinte enthaltend eine vorstehend beschriebene Pigmentzusammensetzung, zweckmäßig in einer Konzentration von 0,5 bis 50 Gew.-%, vorzugsweise 1 bis 30 Gew.-%, bezogen auf das Gesamtgewicht der Inkjet-Tinte. Als Ink-Jet Tinten gibt es solche auf wässriger und nicht-wässriger Basis, Mikroemulsionstinten, UV-Tinten sowie Tinten, die nach dem Hot-Melt-Verfahren arbeiten Wasserbasierende Inkjet -Tinten enthalten im Wesentlichen 0,5 bis 30 Gew.-%, vorzugsweise 1 bis 15 Gew.-% der Pigmentzusammensetzung, 70 bis 95 Gew.-% entionisiertes Wasser, geeignete Dispergierhilfsmittel, ggf. Trägerpolymer und/oder Feuchthaltemittel.

Ink-Jet-Tinten auf Lösungsmittelbasis enthalten im Wesentlichen 0,5 bis 30 Gew.-%, vorzugsweise 1 bis 15 Gew.-%, der Pigmentzusammensetzung, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z. B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.

Gegebenenfalls können die lösungsmittelbasierenden Ink-Jet-Tinten noch weitere Zusatzstoffe enthalten, wie z. B. Netzmittel, Entgaser/Entschäumer, Konservierungsmittel und Antioxidantien.

Mikroemulsionstinten basieren auf organischen Lösemitteln, Wasser und gegebenenfalls einem Tensid. Mikroemulsionstinten enthalten zweckmäßig 0,5 bis 30 Gew.-%, vorzugsweise 1 bis 15 Gew.-%, der Pigmentzusammensetzung, 0,5 bis 95 Gew.-% Wasser und 0,5 bis 95 Gew.-% organische Lösungsmittel und/oder Grenzflächenvermittler.

UV-Tinten bestehen typischerweise aus Monomeren niedrigmolekularer Mono-, Di-, Tri-, Tetra-, und/oder Penta-funktionaler Acrylate und/oder Acrylat, Urethan, Epoxy, oder Polyester basierender Oligomere. Die UV Tinten werden typischerweise kationisch, anionisch oder radikalisch initiiert/vernetzt.

UV-härtbare Tinten enthalten im Wesentlichen 0,5 bis 30 Gew.-% der Pigmentzusammensetzung, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und 0 bis 10 Gew.-% eines Photoinitiators.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 °C und ca. 140 °C liegt. Hot-Melt-Ink-Jet-Tinten bestehen im Wesentlichen aus 20 bis 90 Gew.-% Wachs und 1 bis 10 Gew.-% der Pigmentzusammensetzung. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z. B. die Kristallisation des Wachses) sowie 0 bis 2 Gew.-% Antioxidans enthalten sein.

Die erfindungsgemäßen Toner und Entwickler sowie Inkjet-Tinten werden üblicherweise in Tonerkartuschensets bzw. in Tintensets, bestehend aus gelben, magenta, cyan und schwarzen Tonern bzw. Tinten, welche als Farbmittel entsprechend farbige Pigmente und/oder Farbstoffe enthalten, verwendet. Des Weiteren können sie in Toner- oder Tintensets verwendet werden, die zusätzlich eine oder mehrere Schmuckfarben (spot colors) beispielsweise orange, grün, blau und / oder Sonderfarben (Gold, Silber) enthalten.

Bevorzugt ist dabei ein Satz von Drucktinten oder Tonerkartuschen, dessen schwarze Präparation bevorzugt Ruß als Farbmittel enthält, insbesondere einen Gas- oder Furnaceruß; dessen Cyan-Präparation eine oder mehrere Pigmente aus der Gruppe der Phthalocyaninpigmente enthält, ggf. nuanciert mit Pigment Blue 16, Pigment Blue 56, Pigment Blue 60 oder Pigment Blue 61; dessen Magenta-Präparation bevorzugt eine erfindungsgemäße Pigmentzusammensetzung enthält, ggf. nuanciert mit einem Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 150, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets und Tonerkartuschen noch Nuancierfarbstoffe enthalten, vorzugsweise aus der Gruppe C.I. Acid Yellow 3, C.I. Food Yellow 3, C.I. Acid Yellow 17 und C.I. Acid Yellow 23; C.I. Direct Yellow 86, C.I. Direct Yellow 28, C.I. Direct Yellow 51, C.I. Direct Yellow 98 und C.I. Direct Yellow 132; C.I. Reactive Yellow 37; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 18, C.I. Acid Red 52, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180, C.I. Acid Violet 48, C.I. Acid Violet 54, C.I. Acid Violet 66, C.I. Acid Violet 126, C.I. Acid Blue 1, C.I. Acid Blue 9, C.I. Acid Blue 80, C.I. Acid Blue 93, C.I. Acid Blue 93:1, C.I. Acid Blue 182, C.I. Direct Blue 86, C.I. Direct Blue 199, C.I. Acid Green 1, C.I. Acid Green 16, C.I. Acid Green 25, C.I. Acid Green 81, C.I. Reactive Green 12, C.I. Acid Brown 126, C.I. Acid Brown 237, C.I. Acid Brown 289, C.I. Acid Black 194, C.I. Sulphur Black 1, C.I. Sulphur Black 2, C.I. Sol. Sulphur Black 1, C.I. Reactive Black 5, C.I. Reactive Black 31, C.I. Reactive Black 8; wobei die Reaktivfarbstoffe auch in deren teilweise oder gänzlich hydrolysierten Form vorliegen können.

Weiterhin sind die erfindungsgemäßen Pigmentzusammensetzungen auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteile (z. B. TFT-LCD = Thin Film Transistor Liquid Crystal Displays oder z. B. (S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit (Chroma) Voraussetzung. Darüberhinaus können die pigmentierten Colour Filter auch durch Ink-Jet-Druckverfahren oder andere geeignete Druckverfahren aufgebracht werden.

### Synthesebeispiel 1:

### a) Herstellung der Diazoniumsalz-Lösung:

Es werden 2200 g E-Wasser vorgelegt und 180 g 3-Amino-4-methoxybenzoesäure-N-methylamid (1,0 mol) eingestreut und bei Raumtemperatur homogen verrührt. Nach 15 Minuten wird durch Zugabe von 800 g Eis sowie durch zusätzliche Außenkühlung auf 2 °C abgekühlt und anschließend 290 g Salzsäure (31 %ig) zugesetzt. Das gefällte Hydrochlorid wird durch Zugabe von 179 g Natriumnitritlösung (40 %ig) im Laufe von 15 bis 20 Minuten bei 5 bis 10 °C diazotiert. Die Diazoniumsalz-Lösung wird unter Nitritüberschuss 1,5 h nachgerührt, anschließend nach Zugabe eines Klärhilfsmittels abfiltriert und ggf. der Nitritüberschuss durch Zugabe von Amidosulfonsäure beseitigt.

### b) Herstellung einer Lösung der Kupplungskomponenten-Mischung:

Es werden 2000 g Wasser vorgelegt und unter Rühren 186 g (0,67 mol) N-(2-Methylphenyl)-3-hydroxynaphthalin-2-carbonsäureamid sowie 103 g (0,33 mol) N-(3-Nitrophenyl)-3-hydroxynaphthalin-2-carbosäureamid eingetragen, auf 95 °C erhitzt und durch Zugabe von 330 g Natronlauge (33 %ig) bei 90 bis 95 °C innerhalb 2 Minuten alkalisch gelöst. Anschließend wird auf 80 bis 60 °C abgekühlt und bei dieser Temperatur gehalten. Ggf. kann die warme Lösung noch unter Zugabe eines Klärhilfsmittels filtriert werden.

### c) Azokupplung:

Die geklärte Diazoniumsalz-Lösung aus a) wird vorgelegt, durch Zugabe von ca. 38 g Natriumacetat (in Form einer 4n Lösung) auf pH 4,3 bis 4,5 eingestellt und auf 10 °C abgekühlt. Danach wird unter Rühren die Kuppler-Lösung aus b) im Laufe von 1 bis 1,5 h zudosiert, wobei durch gleichzeitige Zugabe von insgesamt ca. 190 g Salzsäure (31 %ig) der pH-Wert bei 4,8 bis 5 gehalten wird. Anschließend wird ca. 2,5 bis 3 h bzw. bis zum Verschwinden der Diazokomponente bei RT bis 30 °C und pH 5 bis 6 nachgerührt. Nach beendeter Kupplungsreaktion wird noch 1 h auf ca. 50 °C erwärmt, danach filtriert und mit Wasser gewaschen. Nach Trocknung und Mahlung erhält man 480 g einer blaustichig dunkelroten Pigmentmischung, die die nachfolgenden Pigmente der Formeln (1) und (2) im Massenverhältnis von 65 : 35 enthält.

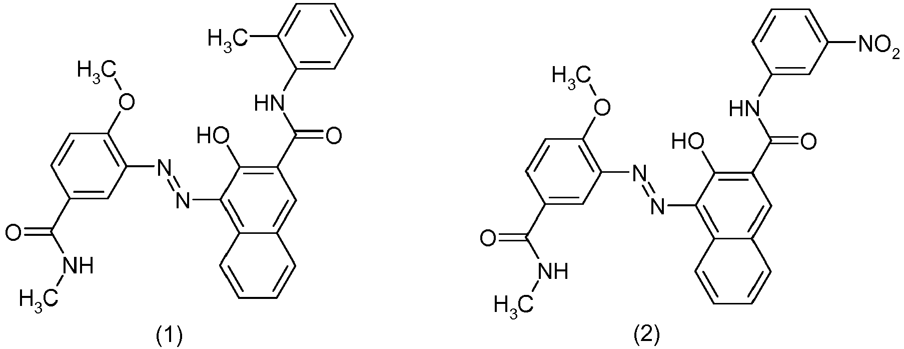

### Synthesebeispiel 2:

a) Die Herstellung der Diazoniumsalz-Lösung erfolgt analog zu Synthesebeispiel 1 a)
b) Die Herstellung der Lösung der Kupplungskomponenten-Mischung erfolgt analog zu Synthesebeispiel 1 b), wobei jedoch 139 g (0,5 mol) N-(2-Methylphenyl)-3-hydroxynaphthalin-2-carbonsäureamid sowie 154 g (0,5 mol) N-(3-Nitrophenyl)-3-hydroxynaphthalin-2-carbonsäureamid eingesetzt werden.
c) Die Azokupplung erfolgt analog zu Synthesebeispiel 1 c) Nach Trocknung und Mahlung erhält man 484 g einer blaustichig dunkelroten Pigmentmischung, die die Pigmente der Formeln (1) und (2) im Massenverhältnis von 48,4 : 51,6 enthält.

### Anwendungsbeispiele:

### A) Coloristische Eigenschaften der Pigmentzusammensetzungen in einem Tonersystem:

### a) Testtoner:

Zur Herstellung eines Testtoners auf Polyesterbasis werden die Pigmentzusammensetzungen in einer Konzentration von 3 bis 5 % in einem handelsüblichen Tonerharz (Polyester Finetone® T 382 ES; Fa. Reichhold) dispergiert. Dazu wird der Polyester in einem Laborkneter aufgeschmolzen und die Pigmentzusammensetzung portionsweise eingetragen. Die Dispergierzeit nach dem Eintragen der letzten Pigmentportion beträgt 45 min.

### b) Testsystem und Messung:

Um koloristische Daten in einem Tonermedium zu erhalten, die von dem verwendeten Maschinentyp möglichst unabhängig sind und nicht von der elektrostatischen Beladbarkeit, Übertragungsrate usw. abhängig sind, wird zur Beurteilung der koloristischen Eigenschaften der verwendeten Pigmentzusammensetzung der oben hergestellte Testtoner in einem Lösemittelfirnis (30 % Finetone® 382 ES in THF/Ethylacetat) gelöst und dann mit einem Handcoater-Stab Nr. 5, 50 µm Nassfilmstärke auf weiße Prüfkarten mit/ohne schwarzen Balken, 100 x 230 mm, 300 g/m² appliziert. Die Applikation enthält jeweils 2,5 % Pigmentzusammensetzung.

Die Messung der Farbstärke und der Farbkoordinaten (Tabelle 1) erfolgte gemäß DIN 5033-7 ISO 7724-2 mittels eines Spektrophotometers (D65-10° Beobachter; Messgeometrie d/8° unter Glanzeinschluss). Es wird die spektrale Reflexion gemessen und die Farbmesswerte im CIELAB-System (DIN 6170, ISO7724-3) ausgewertet. Die relative Farbstärke wird über die gewichtete K/S-Summe ermittelt (DIN EN ISO 787-26).

Die Messung der Optischen Dichte (OD) erfolgte gemäß DIN 16536 mittels eines Densitometers der Fa. Gretag Macbeth unter 45°/0° Ringoptik nach DIN 5033.

**Tabelle 1:**

| Testtoner mit | L* | a* | b* | FarbStärke in % | C | H | OD |
|---|---|---|---|---|---|---|---|
| 5% Synthesebeispiel 1 | 47.1 | 58.9 | -10.3 | 130 | 59.74 | 348.66 | 1.65 |
| 3,5 % Synthesebeispiel 1 | 51.0 | 56.8 | -16.1 | 100 | 58.81 | 344.51 | 1.33 |
| 5 % PR269 (Vergleich) | 51.6 | 54.6 | -13.5 | 96 | 56.29 | 346.49 | 1.25 |
| 5 % PR184 (Vergleich) | 52.0 | 55.9 | -12.5 | 96 | 57.08 | 347.41 | 1.19 |

Die erfindungsgemäße Pigmentzusammensetzung erreicht in diesem Testsystem eine deutlich höhere Farbstärke und eine höher optische Dichte (OD) als andere Naphthol Azo Pigmente (z. B. PR 269, PR 184), die üblicherweise in Tonern verwendet werden. Gleichzeitig ist der Chromawert C höher.

### c) Coloristische Untersuchungen mittels Paintshaker (Tabelle 2):

1 g Pigment bzw. Pigmentzusammensetzung wird mit 50 g 30 %igem Finetone-Firnis (30 % Finetone® T 382 ES in Ethylacetat) und 25 g Mischoxidperlen (0,8 mm Y-stabilisierte Zirkonoxidperlen) für 3 Stunden auf einem Paintshaker dispergiert. Die farbige Lösung wird mit einer Labordruckmaschine (Labratester) (Potentiometer 280, entspricht 10 m/min)) auf Papier (Algro Finess 80 g/m²) und Transparentfolie (Treofan® GND 50) appliziert. Dabei werden Probe und Referenz nebeneinander aufgetragen. Es werden drei Felder mit verschiedenen Schichtdicken gedruckt. Die koloristischen Daten werden am 3. Feld (34 µm Nassfilmstärke) ermittelt (Tabelle 2)

**Tabelle 2:**

| Beispiel | Pigmentzusammensetzung | a* | b* | C | hab | OD |
|---|---|---|---|---|---|---|
| 1 | Synthesebeispiel 1 (100 %) | 51,56 | 13,48 | 53,29 | 345,35 | 0,98 |
| 2 | Synthesebeispiel 1 (90 %) | 50,16 | -13,94 | 52,06 | 344,46 | 0,93 |
| | P. R. 122 (10 %) | | | | | |
| 3 | Synthesebeispiel 1 (80 %) | 49,67 | -15,32 | 51,98 | 342,85 | 0,90 |
| | P. R. 122 (20 %) | | | | | |
| 4 | Synthesebeispiel 1 (70 %) | 49,05 | -15,3 | 51,38 | 342,68 | 0,88 |
| | P. R. 122 (30 %) | | | | | |
| 5 | Synthesebeispiel 1 (50 %) | 47,29 | -15,8 | 49,86 | 341,52 | 0,81 |
| | P. R. 122 (50 %) | | | | | |
| 6 (Vergl.) | P. R. 269 (50 %) | 43,61 | -14,04 | 45,82 | 342,15 | 0,70 |
| | P. R. 122 (50 %) | | | | | |
| 7 (Vergl.) | P. R. 269 (33 %) | 42,94 | -15,1 | 45,52 | 340,62 | 0,68 |
| | P. R. 122 (66 %) | | | | | |
| 8 (Vergl.) | P. R. 269 | 46,34 | -11,81 | 47,82 | 345,71 | 0,80 |
| 9 (Vergl.) | P. R. 122 | 41,48 | -16,67 | 44,7 | 338,11 | 0,60 |

Beispiele 6 bis 9 (Vergleich) sind im Tonerbereich üblicherweise verwendete Pigmente und Pigmentmischungen.

Alle erfindungsgemäßen Pigmentzusammensetzungen weisen höhere Chromawerte C aus als die üblicherweise verwendeten Pigmente oder Pigmentmischungen.
Alle erfindungsgemäßen Pigmentzusammensetzungen weisen höhere Optische Dichten OD aus als die üblicherweise verwendeten Pigmente oder Pigmentmischungen.

### d) Vergleich gegen bekannte magentafarbene Azopigmente:

Mit der gleichen Testmethode wie in Ab) wurden erfindungsgemäße Pigmentzusammensetzungen und verschiedene kommerziell erhältlichen AzoPigmente gegen das Magenta-Pigment C.I. Pigment Red 184 coloristisch verglichen (Tabelle 3).

**Tabelle 3:**

| Beispiel | Pigment | Farbstärke | dH | dC | dL | da | db | transp. |
|---|---|---|---|---|---|---|---|---|
| Referenz | P. R. 184 | 100 | 0 | 0 | 0 | 0 | 0 | ref |
| 10 | Synth.bsp. 1 | 120 | -2,4 | 1,14 | -0,53 | 0,49 | -2,61 | 4tra |
| 11 | Synth.bsp. 2 | 133 | -3,66 | 0,77 | -0,91 | -0,42 | -3,72 | 5 tra |
| 12 (Vgl.) | PR 269 | 93 | 0,38 | 0,17 | 0,31 | 0,26 | 0,33 | 2tra |
| 13 (Vgl.) | PR 185 | 96 | 10,47 | 0,55 | 1,4 | 2,23 | 10,24 | 4op |
| 14 (Vgl.) | PR 176 | 101 | 10,43 | 1,79 | 1,86 | 3,46 | 10 | 2op |
| | | | | | | | | |
| 16 (Vgl.) | PR 146 | 84 | 8,38 | -0,63 | 1,13 | 0,91 | 8,35 | 3op |
| | | | | | | | | |
| 18 (Vgl.) | PR 57:1 | 91 | 3,4 | -3,27 | 0,25 | -2,34 | 4,09 | 2 op |
| 19 (Vgl.) | PR 147 | 93 | 0,46 | -1,13 | -0,08 | -0,96 | 0,75 | 3 op |

Nur die erfindungsgemäßen Pigmentzusammensetzungen weisen gegenüber der Referenz sowohl hohe Farbstärken, einen deutlich blaueren Farbton sowie einen positiven Chromawert auf, und außerdem zeigen sie im Vergleich zu handelsüblichen Pigmenten (Vergleichsbeispiele 12-19) eine verbesserte Transparenz.

### e) Test in chemischen Tonern:

Bei der Herstellung von Suspensionspolymerisationstonern wird in einem Zweiphasensystem aus Wasser und Monomer (Styrol, Acrylate) eine Polymerisation zur Herstellung der Tonerteilchen im µm-Bereich durchgeführt. Damit die erhaltenen Teilchen im gewünschten Farbton eingefärbt sind, muss das Pigment in der Monomerphase fein verteilt vorliegen und darf auch nicht während des Prozesses aus der Monomerphase in die wässrige Phase übergehen. D. h. das Pigment muss eine geeignete Affinität zu der verwendeten Monomermischung haben und darf nicht zu hydrophil sein, da es dann in die wässrige Phase übergehen würde oder sich an der Phasengrenze zwischen Monomer und Wasser aufhalten würde.

Zur Prüfung dieser Eigenschaft wird wie folgt vorgegangen:
2,5 g Pigment, 50 g Styrol werden mit 150 g Glasperlen für 60 min auf einem Paintshaker dispergiert. Nach dem Abtrennen der Perlen werden jeweils 9 g der so hergestellten Pigmentdispersion in 3 verschiedenen Bechergläsern auf wässrige Lösungen mit pH 11,4 - 6,9 und 1,5 gegeben. Anschließend werden die 3 Lösungen 30 min mittels eines Magnetrührers gerührt. Nach dem Abstellen des Rührers wird die Phasentrennung sowie der Aufenthaltsort des Pigmentes (in der Monomerphase oder der wässrigen Phase) visuell bewertet. Im Anschluss werden die Lösungen auf 80 °C erwärmt und abermals 30 min gerührt. Nach Abstellen des Rührers werden die Phasentrennung und der Aufenthaltsort des Pigmentes visuell bewertet.

Bewertung: Die Güte der Phasentrennung wird visuell für jede der 6 Einzelprüfungen bewertet und mit Zahlen zwischen 1 und 3 "benotet", wobei 1 die beste Bewertung ist. Dann wird für jede Probe der Mittelwert aus den 6 Einzelbewertungen gebildet. Je niedriger dieser Wert ist, umso besser geeignet ist das Pigment für einen Suspensionspolymerisationsprozess, Werte kleiner als 2 zeigen, dass das Pigment eine geeignete Hydrophobizität aufweist (Tabelle 4)

**Tabelle 4:**

| Benotung | 1 | 2 | 3 |
|---|---|---|---|
| Beobachtung | Wässrige Phase klar und nicht gefärbt | Wässrige Phase leicht gefärbt, aber transparent | Pigment in der wässrigen Phase; |

Die erfindungsgemäßen Pigmentzusammensetzungen gemäß Synthesebeispiel 1 und 2 erreichen in diesem Test einen Wert (Hydrophobizitätsindex) von 1,7 und sind damit für den Einsatz in Suspensionspolymerisations-Prozessen gut geeignet.

Weiterhin ist es beim Dispergieren der Pigmente wichtig, dass die resultierende Dispersion in der Monomerlösung einen niedrigen Viskositätswert (< 100 mPas) aufweist. Die erfindungsgemäße Pigmentzubereitung aus Synthesebeispiel 1 und 2 erreicht z. B. einen Wert von 36 mPas bzw. 45 mPas, gemessen an einer 5 %igen Dispersion des Pigmentes in Styrol mittels Platte-Kegel-Rotationsviskosimeter (6 mm/2°-Kegel) bei 250 s⁻¹. Auch das zeigt, dass diese Pigmentzusammensetzungen für den Einsatz in chemischen Tonern wie Suspensionspolymerisationstonern geeignet sind.

### f) Elektrostatische Eigenschaften des Toners:

Eine wichtige anwendungstechnische Eigenschaft eines Toners ist das elektrostatische Aufladeverhalten. Dieses wird durch die eingesetzten Pigmente mehr oder weniger beeinflusst. Um den Einfluss des Pigmentes auf das Ladeverhalten des Toners zu beurteilen, wird ein Testtoner hergestellt und dann mittels eines Q/M-Meters die elektrostatische Aufladbarkeit dieses Testtoners gemessen.

5 Teile der erfindungsgemäßen Pigmentzusammensetzung aus Synthesebeispiel 1 werden als Pulver mittels eines Kneters innerhalb von 30 min in 95 Teile eines Tonerbindemittels (Styrene Acrylate: Almacryl B 1501) homogen eingearbeitet. Anschließend wird auf einer Labor-Universalmühle gemahlen und dann auf einem Zentrifugalsichter klassifiziert. Die gewünschte Teilchenfraktion (4 - 25 µm) wird mit einem Carrier aktiviert, der aus mit Styrol-Methacrylat-Copolymer beschichteten Magnetit-Teilchen der Größe 50 - 200 mm (Schüttdichte 2,62 g/cm³) besteht (FBM 100 A, Fa. Powder Tech). Die Messung erfolgt an einem üblichen Q/M-Messstand. Durch Verwendung eines Siebes mit einer Maschenweite von 25 µm wird sichergestellt, dass bei den Tonerausblasungen kein Carrier mitgerissen wird. Die Messungen erfolgen bei ca. 50 %iger relativer Luftfeuchte und 22 °C. In Abhängigkeit von der Aktivierdauer werden folgende Q/M-Werte gemessen (Tabelle 5):

**Tabelle 5:**

| Pigment | Ladungs-steuermittel | Triboelektrische Aufladung in µC/g nach Aktivierung | | | | |
|---|---|---|---|---|---|---|
| | | 5 min | 10 min | 30 min | 2 h | 24 h |
| 5 % Synth.bsp 1 | ohne | - 10 | - 11 | - 12 | - 14 | - 15 |
| 5 % Synth.bsp 1 | Mit 2 % Bontron® E 84 | - 23 | - 27 | - 30 | - 33 | - 32 |

Die Messergebnisse zeigen, dass die Pigmentzusammensetzung die negative Aufladung des Tonerharzes (Aufladung ohne Pigment ca. -5 µC/g) unterstützt aber nicht zu stark dominiert, so dass durch die Zugabe einer geringen Menge eines Ladungssteuerungsmittels die Tonerladung gemäß der Anforderungen eingestellt werden kann.

### B) Anwendung in Ink-Jet-Tinten:

### a) Coloristische Eigenschaften in Solvent Inkjet -Tinten:

Zur Prüfung der koloristischen Eigenschaften der erfindungsgemäßen Pigmentzusammensetzungen wurde zunächst ein Pigment-Konzentrat (3,5 % Pigment, 1,75 % Dispergieradditiv (Disperbyk® 2163), 9,5 % VC/VAc Copolymer, 85 % LM Gemisch (Cyclohexanon/Butoxyethylacetat = 5/95) hergestellt. Dazu werden die Bestandteile 120 min mit 2 mm Glasperlen auf einem Paintshaker dispergiert.

1,6 g des so hergestellten Pigmentkonzentrats werden mit 24 g einer 25 %igen Bindemittellösung verdünnt und homogen vermischt. Das so hergestellte Pigmentkonzentrat wird mit einem Handcoater Nr. 5 (50 µm Nassfilmstärke) auf eine Weich-PVC-Folie (150 µm) aufgetragen.

Bei der Vermessung mit dem Farbmessgerät wird die erfindungsgemäße Pigmentzusammensetzung als Referenz verwendet (Typ) und die kommerziell erhältlichen Naphtholpigmente PR 147 und PR 184 gegen diesen Typ vermessen.

Nur bei ca. 3,5-facher Einwaagemenge erreichen die kommerziell erhältlichen Naphtholpigmente ähnliche Farbstärken wie die erfindungsgemäße Pigmentzusammensetzung. Der Farbton der Vergleichspigmente ist jeweils deutlich gelber (dH = positiv) und trüber (dC = negativ) als bei der erfindungsgemäßen Pigmentzusammensetzung (Tabelle 6).

**Tabelle 6:**

| Pigment | Pigment-Konz. [%] | Farbstärke [%] | dH | dC |
|---|---|---|---|---|
| Synthesebeispiel 1 | 3,5 | 100 | 0 | 0 |
| PR 147 (Vergleich) | 12* | 105 | 2,12 | -1,37 |
| PR 184 (Vergleich) | 12* | 107 | 6,36 | -3,03 |

| | | | | |
|---|---|---|---|---|
| * Die Pigmentkonzentration musste auf 12 % erhöht werden, um vergleichbare Farbstärken zu Synthesebeispiel 1 zu erreichen. | | | | |

## Patentansprüche

1. Verwendung von Pigmentmischungen, die jeweils mindestens ein Pigment der Formeln (IIIa) und (IIIb) enthalten, 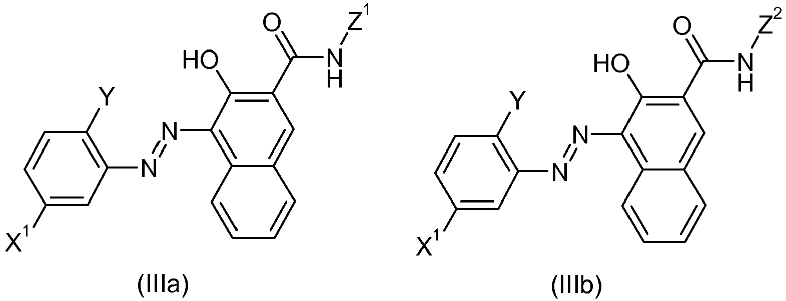 worin unabhängig voneinander
X¹ die Bedeutung Carbamoyl, Methylcarbamoyl oder Ethylcarbamoyl;
Y die Bedeutung Methoxy oder Ethoxy;
Z¹ die Bedeutung Methylphenyl, Ethylphenyl, Methoxyphenyl oder Ethoxyphenyl;; und
Z² die Bedeutung Nitrophenyl oder Cyanophenyl haben,
als Farbmittel in Druckverfahren.

2. Verwendung nach Anspruch 1, **dadurch gekennzeichnet, dass**
X¹ die Bedeutung Carbamoyl oder Methylcarbamoyl;
Y die Bedeutung Methoxy;
Z¹ die Bedeutung Methylphenyl und
Z² die Bedeutung Nitrophenyl haben.

3. Verwendung nach einem oder mehreren der Ansprüche 1 bis 2, **dadurch gekennzeichnet, dass** die Pigmentmischungen 1 bis 99 Gew.-% einer Komponente der Formel (IIIa) und 99 bis 1 Gew.-% einer Komponente der Formel (IIIb) enthalten, jeweils bezogen auf das Gesamtgewicht der Pigmentmischung.

4. Verwendung nach einem oder mehreren der Ansprüche 1 bis 3, **dadurch gekennzeichnet, dass** Hilfsmittel aus der Gruppe der Tenside, pigmentären oder nicht-pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon enthalten sind.

5. Verwendung nach Anspruch 6, **dadurch gekennzeichnet, dass** das Farbmittel zum Nuancieren ein Chinacridonpigment oder ein Naphthol AS-Pigment ist, das von der Verbindung der Formel (IIIa) und (IIIb) verschieden ist.

6. Verwendung nach einem oder mehreren der Ansprüche 1 bis 5, **dadurch gekennzeichnet, dass** das Druckverfahren ein Offset Druck-, Flexodruck- oder Tiefdruck-Verfahren ist.

7. Verwendung nach einem oder mehreren der Ansprüche 1 bis 6, **dadurch gekennzeichnet, dass** das Druckverfahren ein Non-Impact-Printing-Verfahren ist.

8. Verwendung nach Anspruch 7, **dadurch gekennzeichnet, dass** das Non-Impact-Printing-Verfahren die Elektrophotographie, den Ink-Jet-Druck, den Einsatz in elektronischen Tinten und die Herstellung von Farbfiltern umfasst.

9. Druckfarbe, enthaltend eine Pigmentmischung gemäß einem oder mehreren der Ansprüche 1 bis 5.

10. Elektrophotographischer Toner oder Entwickler enthaltend eine Pigmentmischung gemäß einem oder mehreren der Ansprüche 1 bis 5.

11. Inkjet-Tinte enthaltend eine Pigmentmischung gemäß einem oder mehreren der Ansprüche 1 bis 5.

12. Tonerkartuschenset, enthaltend eine Gelb-, Magenta-, Cyan- und Schwarz-Tonerkartusche, wobei die Magentakartusche eine Pigmentmischung gemäß einem oder mehreren der Ansprüche 1 bis 5 enthält.

13. Inkjet-Tintenset, enthaltend eine Gelb-, Magenta-, Cyan- und Schwarz-Tintenpatrone, wobei die Magenta-Tintenpatrone eine Pigmentmischung gemäß einem oder mehreren der Ansprüche 1 bis 5 enthält.

## Claims

1. Use of pigment mixtures comprising at least one pigment of each of the formulae (IIIa) and (IIIb) 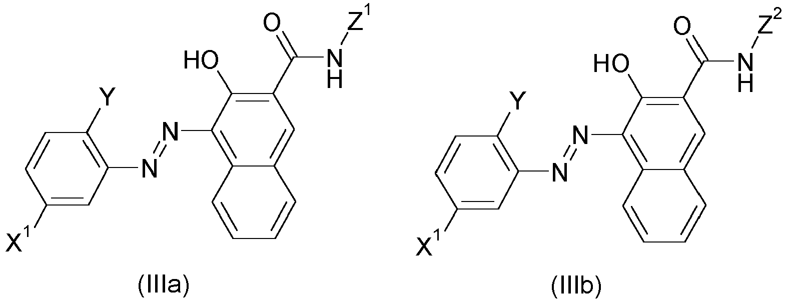 in which, independently of one another,
X¹ is defined as carbamoyl, methylcarbamoyl or ethylcarbamoyl;
Y is defined as methoxy or ethoxy;
Z¹ is defined as methylphenyl, ethylphenyl, methoxyphenyl or ethoxyphenyl; and
Z² is defined as nitrophenyl or cyanophenyl,
as colorant in printing methods.

2. Use according to Claim 1, **characterized in that**
X¹ is defined as carbamoyl or methylcarbamoyl;
Y is defined as methoxy;
Z¹ is defined as methylphenyl and
Z² is defined as nitrophenyl.

3. Use according to one or more of Claims 1 and 2, **characterized in that** the pigment mixtures contain 1% to 99% by weight of a component of the formula (IIIa) and 99% to 1% by weight of a component of the formula (IIIb), based in each case on the total weight of the pigment mixture.

4. Use according to one or more of Claims 1 to 3, **characterized in that** auxiliaries from the group of the surfactants, pigmentary or nonpigmentary dispersants, fillers, standardizers, resins, waxes, defoamers, dust suppressants, extenders, shading colorants, preservatives, drying retardants, rheology control additives, wetting agents, antioxidants, UV absorbers, light stabilizers, or a combination thereof are present.

5. Use according to Claim 6, **characterized in that** the shading colorant is a quinacridone pigment or a naphthol AS pigment other than the compound of the formulae (IIIa) and (IIIb).

6. Use according to one or more of Claims 1 to 5, **characterized in that** the printing method is an offset printing, flexographic printing or intaglio printing method.

7. Use according to one or more of Claims 1 to 6, **characterized in that** the printing method is a non-impact printing method.

8. Use according to Claim 7, **characterized in that** the non-impact printing method comprises electrophotography, inkjet printing, use in electronic inks and the production of color filters.

9. Printing ink comprising a pigment mixture according to one or more of Claims 1 to 5.

10. Electrophotographic toner or developer comprising a pigment mixture according to one or more of Claims 1 to 5.

11. Inkjet ink comprising a pigment mixture according to one or more of Claims 1 to 5.

12. Toner cartridge set comprising a yellow, magenta, cyan and black toner cartridge, wherein the magenta cartridge comprises a pigment mixture according to one or more of Claims 1 to 5.

13. Inkjet ink set comprising a yellow, magenta, cyan and black ink cartridge, wherein the magenta ink cartridge comprises a pigment mixture according to one or more of Claims 1 to 5.

## Revendications

1. Utilisation de mélanges pigmentaires, qui contiennent à chaque fois au moins un pigment des formules (IIIa) et (IIIb) 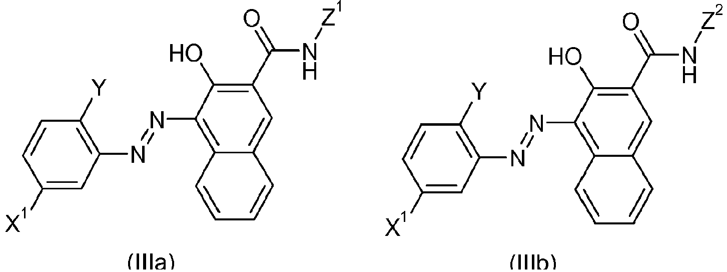 dans lesquelles, indépendamment l'une de l'autre :
X¹ présente la signification carbamoyle, méthylcarbamoyle ou éthylcarbamoyle ;
Y présente la signification méthoxy ou éthoxy ;
Z¹ présente la signification méthylphényle, éthylphényle, méthoxyphényle ou éthoxyphényle ; et
Z² présente la signification nitrophényle ou cyanophényle,
en tant que colorants dans des procédés d'impression.

2. Utilisation selon la revendication 1, **caractérisée en ce que**
X¹ présente la signification carbamoyle ou méthylcarbamoyle ;
Y présente la signification méthoxy ;
Z¹ présente la signification méthylphényle ; et
Z² présente la signification nitrophényle.

3. Utilisation selon l'une ou plusieurs des revendications 1 à 2, **caractérisée en ce que** les mélanges pigmentaires contiennent 1 à 99% en poids d'un composant de formule (IIIa) et 99 à 1% en poids d'un composant de formule (IIIb), à chaque fois par rapport au poids total du mélange pigmentaire.

4. Utilisation selon l'une ou plusieurs des revendications 1 à 3, **caractérisée en ce que** des adjuvants du groupe des tensioactifs, des dispersants pigmentaires ou non pigmentaires, des charges, des agents de fixation, des résines, des cires, des antimousses, des agents antipoussière, des agents d'allongement, des colorants pour le nuançage, des conservateurs, des agents retardateurs du séchage, des additifs pour réguler la rhéologie, des agents mouillants, des antioxydants, des absorbants des UV, des stabilisateurs à la lumière ou une combinaison de ceux-ci sont contenus.

5. Utilisation selon la revendication 6, **caractérisée en ce que** le colorant pour le nuançage est un pigment de quinacridone ou un pigment de naphtol AS, qui est différent du composé de formule (IIIa) et (IIIb).

6. Utilisation selon l'une ou plusieurs des revendications 1 à 5, **caractérisée en ce que** le procédé d'impression est un procédé d'impression offset, de flexographie ou de rotogravure.

7. Utilisation selon l'une ou plusieurs des revendications 1 à 6, **caractérisée en ce que** le procédé d'impression est un procédé d'impression sans impact.

8. Utilisation selon la revendication 7, **caractérisée en ce que** le procédé d'impression sans impact comprend l'électrophotographie, l'impression par jet d'encre, l'utilisation dans des encres électroniques et la préparation de filtres couleur.

9. Encre d'impression, contenant un mélange pigmentaire selon l'une ou plusieurs des revendications 1 à 5.

10. Toner ou révélateur électrophotographiques contenant un mélange pigmentaire selon l'une ou plusieurs des revendications 1 à 5.

11. Encre pour jet d'encre, contenant un mélange pigmentaire selon l'une ou plusieurs des revendications 1 à 5.

12. Set de cartouches de toner, contenant une cartouche de toner jaune, magenta, cyan et noir, la cartouche de magenta contenant un mélange pigmentaire selon l'une ou plusieurs des revendications 1 à 5.

13. Set d'encres pour jet d'encre, contenant une cartouche d'encre jaune, magenta, cyan et noir, la cartouche d'encre magenta contenant un mélange pigmentaire selon l'une ou plusieurs des revendications 1 à 5.
